# EUROPEAN PATENT APPLICATION

(11) **EP 4 290 438 A1**
(43) Date of publication of application: **13.12.2023**
(21) Application number: 22749129.7
(22) Date of filing: 28.01.2022
(51) Int. Cl.: G06Q 10/06

(54) **QUANTUM CIRCUIT-BASED VALUE-AT-RISK ESTIMATION METHOD AND APPARATUS, MEDIUM, AND ELECTRONIC DEVICE**

(30) Priority: 03.02.2021 CN 202110150783
(71) Applicant: Origin Quantum Computing Technology (Hefei) Co., Ltd, Hefei, Anhui 230088 (CN)
(72) Inventor: YUAN, Yewei, Hefei, Anhui 230088 (CN); LI, Ye, Hefei, Anhui 230088 (CN); DOU, Menghan, Hefei, Anhui 230088 (CN)
(74) Representative: Rau, Schneck & Hübner Patentanwälte Rechtsanwälte PartGmbB
(86) International application number: PCT/CN2022/074780
(87) International publication number: WO 2022/166850

(57) **Abstract**

Disclosed is a quantum circuit-based value-at-risk estimation method, device, medium and electronic device, which represents correspondingly sampled value fluctuation ratios and fluctuation ratio probabilities based on the N target qubits, then builds a corresponding quantum circuit based on the target qubits, obtains every target probability whose value fluctuation ratio is less than a fluctuation ratio reference value through the quantum circuit, then determines the target value fluctuation ratio according to the target probability and the probability threshold, and finally calculates the target value-at-risk of the target object according to the target value fluctuation ratio.

## Description

The disclosure claims priority to a Chinese patent application No. 202110150783.1 filed on February 3, 2021 and entitled "QUANTUM CIRCUIT-BASED VALUE-AT-RISK ESTIMATION METHOD, DEVICE, MEDIUM AND ELECTRONIC DEVICE", which is hereby incorporated by reference in its entirety.

### TECHNICAL FIELD

The present disclosure relates to the field of quantum computation, in particular to a quantum circuit-based value-at-risk estimation method, device, medium and electronic device.

### BACKGROUND

Quantum computers are a class of physical devices that follow the laws of quantum mechanics to perform high-speed mathematical and logical operations, store and process quantum information. A device is a quantum computer when it processes and computes quantum information and runs quantum algorithms. Quantum computers are a key technology being researched because of their ability to handle mathematical problems more efficiently than ordinary computers, for example, accelerating the time to crack RSA keys from hundreds of years to hours.

VaR (Value at Risk, value-at-risk model) value is a common risk measurement method in a financial product. At present, the value-at-risk is generally estimated by the classical Monte Carlo method, but this method requires a large sample size, and when dealing with the large sample size by the classical Monte Carlo method, the calculation is heavy and slow, leading to inefficient value-at-risk estimation.

### SUMMARY

The objective of the present disclosure is to provide a quantum circuit-based value-at-risk estimation method, device, medium and electronic device, for solving the technical problem of inefficient value-at-risk estimation in the current value-at-risk estimation method.

One embodiment of the present disclosure provides a quantum circuit-based value-at risk estimation method, and the value-at-risk estimation method comprises:
obtaining 2^{N} sampling points from a distribution profile of value fluctuation ratios of a target object, and preparing value fluctuation ratios and fluctuation ratio probabilities corresponding to the 2^{N} sampling points to a quantum state corresponding to N target qubits;
obtaining every target probability whose value fluctuation ratio is less than a preset fluctuation ratio reference value based on a quantum circuit containing the N target qubits;
updating, if the target probability does not match the preset probability threshold, the fluctuation ratio reference value according to the target probability and a preset probability threshold, and then returning to perform the step of obtaining every target probability whose value fluctuation ratio is less than a preset fluctuation ratio reference value based on a quantum circuit containing the N target qubits, until the target probability matches the probability threshold;
determining a target value fluctuation ratio of the target object according to the fluctuation ratio reference value, and calculating a target value-at-risk of the target object according to the target value fluctuation ratio.

In one embodiment, the step of obtaining every target probability whose value fluctuation ratio is less than a preset fluctuation ratio reference value based on a quantum circuit containing the N target qubits, comprises:
obtaining a preset result bit, and auxiliary bits in one-to-one correspondence with the target qubits, and determining quantum logic gates to be acted on the target qubits and corresponding auxiliary bits according to binary complement corresponding to the fluctuation ratio reference value;
building and running the quantum circuit according to every quantum logic gate, and outputting to the result bit a result quantum state representing a comparison result of every value fluctuation ratio with the fluctuation ratio reference value;
obtaining every target probability whose value fluctuation ratio is less than the fluctuation ratio reference value based on the result quantum state.

In one embodiment, the step of determining quantum logic gates to be acted on the target qubits and corresponding auxiliary bits according to binary complement corresponding to the fluctuation ratio reference value, comprises:
sequentially determining the quantum logic gates to be acted on the target qubits and corresponding auxiliary bits according to each coded value of the binary complement corresponding to the fluctuation ratio reference value.

In one embodiment, the step of obtaining every target probability whose value fluctuation ratio is less than the fluctuation ratio reference value based on the result quantum state, comprises:
obtaining an amplitude value of a set state in the result quantum state and calculating every target probability whose value fluctuation ratio is less than the fluctuation ratio reference value according to the amplitude value of the set state.

In one embodiment, the step of obtaining an amplitude value of a set state in the result quantum state, comprises specifically:
obtaining a current argument upper bound value and a current argument lower bound value corresponding to the amplitude value of the set state in the result quantum state, and calculating a first difference value of the current argument upper bound value and the current argument lower bound value as a target difference value;
determining, when the target difference value is greater than a preset accuracy threshold, a next argument magnification factor as well as a next labeling parameter corresponding to a next iteration step according to a preset intermediate variable parameter, the current argument upper bound value and the current argument lower bound value;
controlling a preset amplification quantum comparator circuit to amplify the quantum comparator circuit by the next argument amplification factor, and measuring the set state in the result quantum state in amplified quantum comparator circuit according to a preset total number of observation;
according to the current argument upper bound value, the current argument lower bound value, the next argument amplification factor, the next labeling parameter as well as a measurement result of the set state in the result quantum state, obtaining a second difference value of a next argument upper bound value and a next argument lower bound value of the amplitude value of the set state in the result quantum state as a target difference value until the target difference value is greater than the accuracy threshold;
determining the amplitude value of the set state in the result quantum state according to the measurement result of the set state in the result quantum state.

In one embodiment, the step of updating, if the target probability does not match the preset probability threshold, the fluctuation ratio reference value according to the target probability and a preset probability threshold, comprises:
updating, if the target probability is lower than the probability threshold, the fluctuation ratio reference value according to the fluctuation ratio reference value and a right endpoint of a sampling interval corresponding to the fluctuation ratio reference value;
updating, if the target probability is greater than the probability threshold, the fluctuation ratio reference value according to the fluctuation ratio reference value and a left endpoint of the sampling interval corresponding to the fluctuation ratio reference value.

In one embodiment, the step of preparing value fluctuation ratios and fluctuation ratio probabilities corresponding to the 2^{N} sampling points to a quantum state corresponding to N target qubits, comprises specifically:
determining every eigenstate corresponding to the N target qubits according to the value fluctuation ratios corresponding to the 2^{N} sampling points, and determining an amplitude value of every eigenstate according to the fluctuation ratio probabilities corresponding to the 2^{N} sampling points.

Another embodiment of the present disclosure provides a quantum circuit-based value-at risk estimation device, and the value-at-risk estimation device comprises:
a preparing module configured for obtaining 2^{N} sampling points from a distribution profile of value fluctuation ratios of a target object, and preparing value fluctuation ratios and fluctuation ratio probabilities corresponding to the 2^{N} sampling points to a quantum state corresponding to N target qubits;
a probability calculating module configured for obtaining every target probability whose value fluctuation ratio is less than a preset fluctuation ratio reference value based on a quantum circuit containing the N target qubits;
a base updating module configured for updating, if the target probability does not match the preset probability threshold, the fluctuation ratio reference value according to the target probability and a preset probability threshold, and then returning to perform the step of obtaining every target probability whose value fluctuation ratio is less than a preset fluctuation ratio reference value based on a quantum circuit containing the N target qubits, until the target probability matches the probability threshold;
a value calculating module configured for determining a target value fluctuation ratio of the target object according to the fluctuation ratio reference value, and calculating a target value-at-risk of the target object according to the target value fluctuation ratio.

Another embodiment of the present disclosure provides a storage medium, the storage medium stores a computer program therein, wherein the computer program is configured for executing at runtime the method of any one described above.

Another embodiment of the present disclosure provides an electronic device comprising a memory and a processor, the memory stores a computer program therein, and the processor is configured for running the computer program to execute the method of any one described above.

Compared to prior art, in the quantum circuit-based value-at risk estimation method provided by the present disclosure, the present disclosure obtains 2^{N} sampling points from a distribution profile of value fluctuation ratios of a target object, and prepares value fluctuation ratios and fluctuation ratio probabilities corresponding to the 2^{N} sampling points to a quantum state corresponding to N target qubits; obtains every target probability whose value fluctuation ratio is less than a preset fluctuation ratio reference value based on a quantum circuit containing the N target qubits; updates, if the target probability does not match the preset probability threshold, the fluctuation ratio reference value according to the target probability and a preset probability threshold, and then returns to perform the step of obtaining every target probability whose value fluctuation ratio is less than a preset fluctuation ratio reference value based on a quantum circuit containing the N target qubits, until the target probability matches the probability threshold; determines a target value fluctuation ratio of the target object according to the fluctuation ratio reference value, and calculates a target value-at-risk of the target object according to the target value fluctuation ratio. In this way, the present disclosure represents correspondingly sampled value fluctuation ratios and fluctuation ratio probabilities based on the N target qubits, then builds a corresponding quantum circuit based on the target qubits, obtains every target probability whose value fluctuation ratio is less than a fluctuation ratio reference value through the quantum circuit, then determines the target value fluctuation ratio according to the target probability and the probability threshold, and finally calculates the target value-at-risk of the target object according to the target value fluctuation ratio. Therefore, based on the quantum algorithm to realize the value-at-risk estimation, the present disclosure not only improves the efficiency of the value-at-risk estimation, but also improves the accuracy of the value-at-risk estimation, thereby solving the technical problem of inefficient value-at-risk estimation in the current value-at-risk estimation method.

### BRIEF DESCRIPTION OF THE DRAWINGS

FIG. 1 is a block diagram of a hardware structure of a computer terminal of a quantum circuit-based value-at risk estimation method according to an embodiment of the present disclosure;
FIG. 2 is a flowchart of a quantum circuit-based value-at risk estimation method according to an embodiment of the present disclosure;
FIG. 3 is a schematic diagram of a logic or gate quantum according to an embodiment of the present disclosure;
FIG. 4 is a schematic diagram of a quantum circuit according to an embodiment of the present disclosure.

### DETAILED DESCRIPTION

The embodiments described below by reference to the accompanying drawings are exemplary and are intended to explain the invention only and are not to be construed as limiting the invention.

A quantum circuit-based value-at risk estimation method is first provided by an embodiment of the present disclosure. The method can be applied to electronic device, such as a computer terminal, specifically an ordinary computer, a quantum computer and the like.

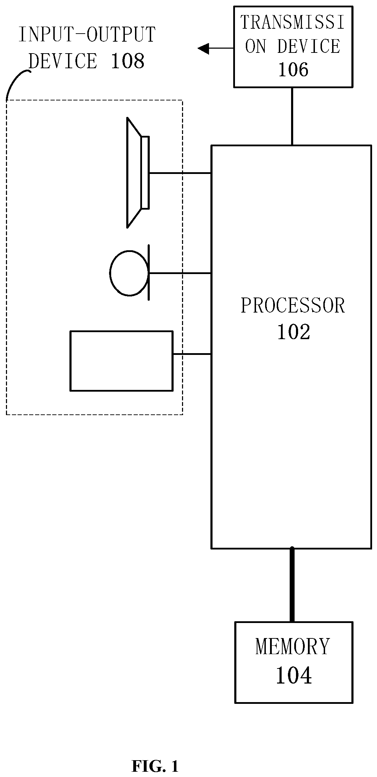

It will be described in detail below by taking running on a computer terminal as an example. FIG. 1 is a block diagram of a hardware structure of a computer terminal of a quantum circuit-based value-at risk estimation method according to an embodiment of the present disclosure. As shown in FIG. 1, the computer terminal may include one or more (only one shown in FIG. 1) processor 102 (the processor 102 may include, but is not limited to, a processing device such as a microprocessor MCU or a programmable logic device FPGA) and a memory 104 for storing the quantum circuit-based value-at risk estimation method. In one embodiment, the computer terminal may further include a transmission device 106 for communication functions and an input-output device 108. Those of ordinary skill in the art may understand that the structure shown in FIG. 1 is only schematic, and does not limit the structure of the computer terminal described above. For example, the computer terminal may further include more or fewer assemblies than shown in FIG. 1, or have a different configuration than that of FIG. 1.

The memory 104 may be used to store a software program as well as a module for application software, such as program instructions/modules corresponding to the quantum circuit-based value-at-risk estimation method in embodiments of the present disclosure. The processor 102 executes various functional applications as well as data processing, i.e., realizes the above-described method, by running the software program as well as the module stored in the memory 104. The memory 104 may include a high-speed random memory, and may also include a non-volatile memory, such as one or more magnetic storage devices, flash memory, or other non-volatile solid-state memory. In some examples, the memory 104 may further include memories set remotely relative to the processor 102, and these remote memories may be connected to the computer terminal via a network. An example of the network includes, but is not limited to, the Internet, an enterprise intranet, a local area network, a mobile communication network, and combinations thereof.

The transmission device 106 is used to receive or send data via a network. A specific example of the above network may include a wireless network provided by a communications provider of a computer terminal. In one example, the transmission device 106 includes a Network Interface Controller (NIC) that may be connected to other network devices via a base station so that it may communicate with the Internet. In one example, the transmission device 106 may be a Radio Frequency (RF) module for communicating wirelessly with the Internet.

It should be noted that a real quantum computer is hybrid in structure and consists of two main parts: a classical computer, which is responsible for performing classical computation and control, and a quantum device, which is responsible for running a quantum program and thus realizing quantum computation. The quantum program is a sequence of instructions written in a quantum language, such as QRunes, that can be run on the quantum computer, which enables support for a quantum logic gate operation and ultimately quantum computation. Specifically, the quantum program is a sequence of instructions that operates the quantum logic gate in a certain time sequence.

In a practical application, quantum computing simulation is usually required to verify quantum algorithms, quantum applications, and so on, due to the limitation of the development of quantum device hardware. Quantum computing simulation is the process of simulating a quantum program corresponding to a specific problem by using a virtual architecture (i.e., a quantum virtual machine) built with the resources of an ordinary computer. Usually, it is necessary to construct the quantum program corresponding to the specific problem. The quantum program referred to in the embodiments of the present disclosure is a program written in a classical language that characterizes quantum bits and their evolution, in which quantum bits, quantum logic gates, and the like associated with quantum computation are represented by corresponding classical codes.

The quantum circuit, as an embodiment of a quantum program, is also known as a quantum logic circuit, is the most commonly used general-purpose quantum computation model, represents a circuit that operates on a quantum bit in an abstract concept, consists of a quantum bit, a circuit (a timeline), and a variety of quantum logic gates, and is often required to read out the results of the final quantum measurement operation.

Unlike a conventional circuit where metal wires are connected to transmit a voltage or current signal, in the quantum circuit, the circuit can be viewed as connected by time, i.e., the state of the qubit evolves naturally over time following the instructions of the Hamiltonian operator, until it encounters a logic gate and is operated.

A quantum program as a whole corresponds to a total quantum circuit. The quantum program in this disclosure refers to the total quantum circuit, wherein the total number of quantum bits in the total quantum circuit is the same as the total number of quantum bits in the quantum program. It can be understood that a quantum program can be composed of a quantum circuit, measurement operations for the quantum bits in the quantum circuit, a register for storing the measurement results, and a control flow node (jump instruction). A quantum circuit can contain tens, hundreds or even thousands of quantum logic gate operations. The process of executing a quantum program is the process of executing all quantum logic gates according to a certain time sequence. It should be noted that time sequence is the time sequence in which a single quantum logic gate is executed.

It should be noted that in classical computing, the most basic unit is a bit, and the most basic control mode is a logic gate. The purpose of controlling the circuit can be achieved through the combination of logic gates. Similarly, the way to handle qubits is quantum logic gates. Quantum states can be evolved using quantum logic gates. Quantum logic gates are the basis of quantum circuits, and include: single-bit quantum logic gates, such as Hadamard gate (H gate, Hadamard gate), Pauli-X gate (X gate), Pauli-Y gate (Y gate) , Pauli-Z gate (Z gate), RX gate, RY gate, RZ gate, etc.; multi-bit quantum logic gates, such as CNOT gate, CR gate, iSWAP gate, Toffoli gate, etc. Quantum logic gates are generally represented by unitary matrices, and unitary matrices are not only in the form of matrices, but also a kind of operation and transformation. Generally, the function of a quantum logic gate on a quantum state is calculated by multiplying the left side of the unitary matrix by the matrix corresponding to the right vector of the quantum state.

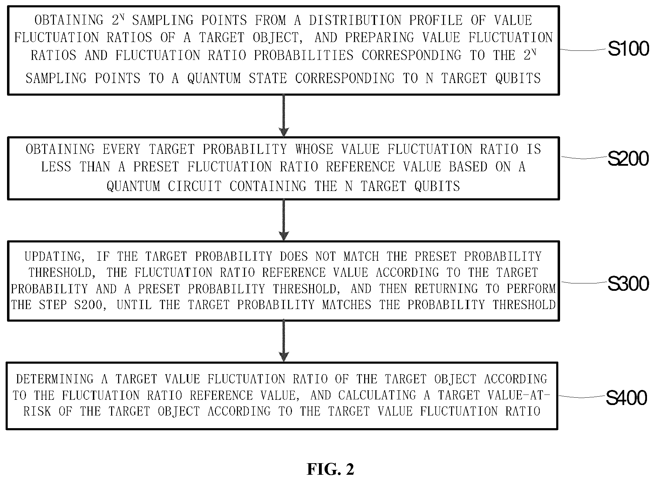

See FIG. 2, FIG. 2 is a flowchart of a quantum circuit-based value-at risk estimation method according to an embodiment of the present disclosure.

The present embodiment provides a first embodiment of a quantum circuit-based value-at risk estimation method, and the quantum circuit-based value-at risk estimation method comprises:
Step S100, obtaining 2^{N} sampling points from a distribution profile of value fluctuation ratios of a target object, and preparing value fluctuation ratios and fluctuation ratio probabilities corresponding to the 2^{N} sampling points to a quantum state corresponding to N target qubits;

In this embodiment, the target object includes, but is not limited to, financial products, securities portfolios, financial derivatives, underlying assets, and the like. The distribution profile of value fluctuation ratios includes every value fluctuation ratio of the target object and its correspondingly distributed fluctuation ratio probability.

It should be noted that, in order to obtain the distribution profile of value fluctuation ratios, it is first necessary to obtain the historical value fluctuation ratio data corresponding to the target object, then calculate the average value *µ* and variance σ corresponding to the historical value fluctuation ratio data, and according to *µ* and σ fit the historical value fluctuation ratio data to a normal distribution or a T distribution, thereby obtaining the distribution profile of value fluctuation ratios that follows the normal distribution or the T distribution.

2^{N} sampling points are obtained from the distribution profile of value fluctuation ratios, and each sampling point includes a value fluctuation ratio and its corresponding fluctuation ratio probability. In order to make the sum of the fluctuation ratio probabilities corresponding to 2^{N} sampling points equal to 1, the 2^{N} sampling points are normalized, that is, the ratio of every fluctuation ratio probability to the probability sum of 2^{N} sampling points is used as the fluctuation ratio probability after normalization of each sampling point.

Then, preparing value fluctuation ratios and fluctuation ratio probabilities corresponding to the 2^{N} sampling points to a quantum state corresponding to N target qubits.

Exemplary, the step of preparing value fluctuation ratios and fluctuation ratio probabilities corresponding to the 2^{N} sampling points to a quantum state corresponding to N target qubits, comprises specifically:
determining every eigenstate corresponding to the N target qubits according to the value fluctuation ratios corresponding to the 2^{N} sampling points, and determining an amplitude value of every eigenstate according to the fluctuation ratio probabilities corresponding to the 2^{N} sampling points. It should be noted that the fluctuation ratio probability used for determining the amplitude value is the normalize value.

It can be understood that in a classical computer, the basic unit of information is a bit, and a bit has two states of 0 and 1. The most common physical implementation is to represent these two states through the level. In quantum computing, the basic unit of information is a qubit, and the qubit also has two states of 0 and 1, which are recorded as |0□state and |1□state. Unlike the bits of the classical computer, the qubit can be a superposition of two states |0□and |1□, which can be expressed as |ψ□=a|0□+b|1□. Wherein, a and b are complex numbers representing the amplitudes (probability amplitudes) of |0□state and |0□state respectively, and | Dis a Dirac symbol. After measurement, the state of the qubit collapses to a definite eigenstate, such as |0□state or |1□state. Wherein, the probability of collapsing to |0□is |a|2, the probability of collapsing to |1□is |b|2, and |a|2+|b|2=1.

In the present embodiment, every eigenstate corresponding to the N target qubits is determined according to the value fluctuation ratios corresponding to the 2^{N} sampling points, and an amplitude value of every eigenstate is determined according to the fluctuation ratio probabilities corresponding to the 2^{N} sampling points.

Specifically, when N=1, two eigenstates corresponding to one target qubit are determined according to two sampling points, namely |0□state and |1□state. Then, two value fluctuation ratios corresponding to the two sampling points are represented based on the |0□state and |1□state, and based on the square of the modulus of the two amplitudes corresponding to the |0□state and the |1□state, such as |a|² and |b|², two fluctuation ratio probabilities corresponding to the two sampling points are represented. When N=3, 8 eigenstates corresponding to the 3 target qubits are determined according to 2³ sampling points, namely |000□, |001□, |010□, |011□, |100□, 1101 □, |110□, |111□. Then, value fluctuation ratios of 8 sampling points are determined based on 8 eigenstates, and fluctuation ratio probabilities corresponding to 8 sampling points are represented based on the square of the magnitude of the amplitude corresponding to each eigenstate. Therefore, the preparation of quantum states corresponding to the N target qubits is completed.

Step S200, obtaining every target probability whose value fluctuation ratio is less than a preset fluctuation ratio reference value based on a quantum circuit containing the N target qubits.

In the present embodiment, the preset fluctuation ratio reference value is a preset parameter used for comparison with each value fluctuation rate, and the fluctuation ratio reference value can be determined and updated according to a dichotomy method. Based on the quantum circuit containing N target qubits, each value fluctuation rate is compared with the fluctuation ratio reference value, and a comparison result is output. Then, according to the comparison result, each probability whose value fluctuation ratio is less than the preset fluctuation ratio reference value is obtained as the target probability. It can be understood that each value fluctuation rate is encoded on the N target qubits.

Exemplary, the step of obtaining every target probability whose value fluctuation ratio is less than a preset fluctuation ratio reference value based on a quantum circuit containing the N target qubits, comprises:
obtaining a preset result bit, and auxiliary bits in one-to-one correspondence with the target qubits, and determining quantum logic gates to be acted on the target qubits and corresponding auxiliary bits according to binary complement corresponding to the fluctuation ratio reference value;
building and running the quantum circuit according to every quantum logic gate, and outputting to the result bit a result quantum state representing a comparison result of every value fluctuation ratio with the fluctuation ratio reference value;
obtaining every target probability whose value fluctuation ratio is less than the fluctuation ratio reference value based on the result quantum state.

Specifically, obtaining N target qubits, N auxiliary bits and one result bit. Wherein, the auxiliary bits can be used as carry qubits, and are in one-to-one correspondence with the target qubits for storing the carry. The result bit is used for outputting the comparison result.

Then, determining quantum logic gates to be acted on the target qubits and corresponding auxiliary bits according to the coded value of each bit of the binary complement corresponding to the fluctuation ratio reference value.

Specifically, when the coded value of one bit of the binary complement is 0, the corresponding quantum logic gate is a Toffoli gate, and when the coded value of one bit of the binary complement is 1, the corresponding quantum logic gate is a logical OR gate.

It should be noted that only when the coded value of the first bit of the binary complement is 0, it corresponds to the non-quantum logic gate operation; when the coded value of the first bit of the binary complement is 1, it corresponds to the CNOT gate operation.

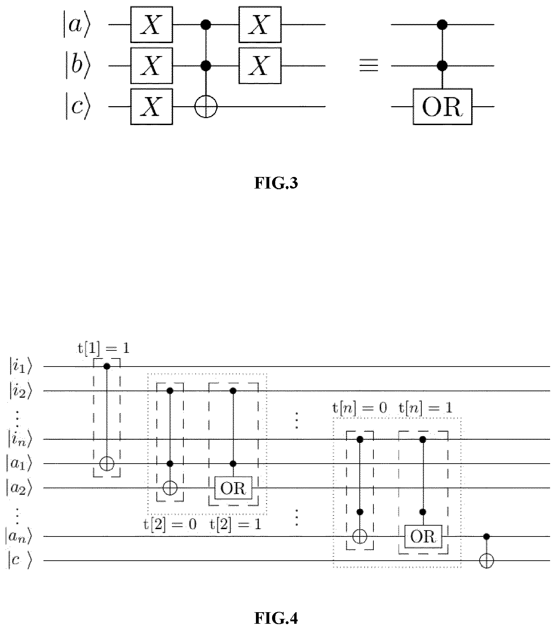

In a specific implementation, the logical OR gate (OR gate) can be constructed by a Toffoli gate and an X gate, and other quantum logic gates equivalent to the Toffoli gate and the logical OR gate are also reasonable and feasible. As shown in the left line of FIG. 3, a configuration of the logical OR gate may sequentially include three NOT gates, one Toffoli gate and two NOT gates.

Finally, after building the quantum circuit by combining each quantum logic gate, the result bit, N target qubits and their corresponding N auxiliary bits, running the quantum circuit and outputting to the result bit the result quantum state corresponding to the comparison result. The result quantum state is used for representing a comparison result of every value fluctuation ratio with the fluctuation ratio reference value. Then, every target probability whose value fluctuation ratio is less than the fluctuation ratio reference value can be obtained based on the result quantum state.

Exemplary, during building the quantum circuit, the quantum logic gates to be acted on the target qubits and corresponding auxiliary bits can be determined sequentially according to each coded value of the binary complement corresponding to the fluctuation ratio reference value.

As shown in FIG. 4, |in> is the N target qubits, |i1> is the lowest bit, |in> is the highest bit, |an> is the auxiliary bit, |a1> is the lowest bit, |an> is the highest bit, and C is the comparison bit. A set of n-bit binary complements of the fluctuation ratio reference value is represented by t[1,...,n], t[1] is the lowest bit, and t[n] is the highest bit. Wherein, the number of digits of the binary complement of the fluctuation ratio reference value, the number of target qubits and the number of auxiliary bits are all the same and correspond to each other. For example, the number of digits of the binary complement of the fluctuation ratio reference value, the number of target qubits, and the number of auxiliary bits are all N.

Further as shown in FIG. 4, first determining the quantum logic gate to be acted on the first target qubit |i1> and the first auxiliary bit |a1> according to the value of t[1], specifically: when t[1]=1, it is determined that the quantum logic gate to be acted on the first target qubit |i1> and the first auxiliary bit |a1> is a CNOT gate; when t[1]=0, no operation needs to be performed on the first auxiliary bit.

Then, determining the target qubit on the corresponding bit and the quantum logic gate on the auxiliary bit according to t[2], t[3]...t[n] in sequence. Exemplarily, as shown in the dashed box in FIG. 4, it is determined that the quantum logic gate to be acted on the second target qubit |i2>, the first auxiliary bit |a1> and the second auxiliary bit |a2> is a logical OR gate; when t[2]=0, it is determined that the quantum logic gate to be acted on the second target qubit |i2>, the first auxiliary bit |a1> and the second auxiliary bit |a2> is a Toffoli gate.

By analogy, until the quantum logic gate to be acted on the nth auxiliary bit | an > is determined.

Then, by preparing the CONT gate to the result bit, the result quantum state corresponding to the comparison result of every value fluctuation ratio with the fluctuation ratio reference value can be prepared to the result bit.

Exemplary, an amplitude value of a set state in the result quantum state can be obtained and every target probability whose value fluctuation ratio is less than the fluctuation ratio reference value can be calculated according to the amplitude value of the set state.

Specifically, taking the foregoing as an example, the result quantum state on the result bit is a superposition state, and the set state may be a 10) state or a 11) state. The set state in the result quantum state can be obtained by measurement. When the measured result quantum state is the 10) state, it means that every value fluctuation ratio is less than the fluctuation ratio reference value, and when the measured result quantum state is the 11) state, it means the opposite of before. However, the measurement can only measure the 10) state or the 11) state that collapses with a certain probability, so multiple measurements may be carried out, and the measurement number may be determined according to an actual need. Theoretically, if the 10) state is measured for multiple measurements, it means that all value fluctuation ratios are less than the fluctuation ratio reference value; if the 11) state is measured for multiple measurements, it means that none of all value fluctuation ratios is less than the fluctuation ratio reference value; if there are both 10) state and 11) state in multiple measurements, it means that there are ratios smaller than the fluctuation ratio reference value and ratios not smaller than the fluctuation ratio reference value in all value fluctuation ratios. Thus, according to the amplitude value corresponding to the |0□state in the result quantum state, the target probability that each value fluctuation ratio is smaller than the fluctuation ratio reference value can be determined; according to the amplitude value corresponding to the |1□state in the result quantum state, the probability that every value fluctuation ratio is not less than the fluctuation ratio reference value can be determined.

In addition to determining the amplitude value of the set state in the result quantum state by the above measurement method, the amplitude value of the set state in the result quantum state can also be determined by calculating the amplitude value of the qubit.

Exemplary, the step of obtaining an amplitude value of a set state in the result quantum state, comprises:
obtaining a current argument upper bound value and a current argument lower bound value corresponding to the amplitude value of the set state in the result quantum state, and calculating a first difference value of the current argument upper bound value and the current argument lower bound value as a target difference value;
determining, when the target difference value is greater than a preset accuracy threshold, a next argument magnification factor as well as a next labeling parameter corresponding to a next iteration step according to a preset intermediate variable parameter, the current argument upper bound value and the current argument lower bound value;
controlling a preset amplification quantum comparator circuit to amplify the quantum comparator circuit by the next argument amplification factor, and measuring the set state in the result quantum state in amplified quantum comparator circuit according to a preset total number of observation;
according to the current argument upper bound value, the current argument lower bound value, the next argument amplification factor, the next labeling parameter as well as a measurement result of the set state in the result quantum state, obtaining a second difference value of a next argument upper bound value and a next argument lower bound value of the amplitude value of the set state in the result quantum state as a target difference value until the target difference value is greater than the accuracy threshold;
determining the amplitude value of the set state in the result quantum state according to the measurement result of the set state in the result quantum state.

Specifically, in the method for calculating the amplitude value of the qubit (that is, the result bit) adopted in the above steps, by determining the amplification parameters of the quantum circuit in each iterative step so as to continuously iterate so that the difference between the argument upper bound value and the argument lower bound value is within the accuracy threshold, it is possible to avoid the problem that the amplitude value cannot converge and improve the accuracy of the amplitude value. Moreover, for the principle and more detailed implementation process, please refer to the Chinese patent document "Application No. 202011591351.6, filing date 20201229, application name "METHOD, DEVICE, STORAGE MEDIUM AND ELECTRONIC DEVICE FOR ESTIMATING AMPLITUDE OF QUANTUM CIRCUIT"", which will not be repeated herein.

Step S300, updating, if the target probability does not match the preset probability threshold, the fluctuation ratio reference value according to the target probability and a preset probability threshold, and then returning to perform the step of obtaining every target probability whose value fluctuation ratio is less than a preset fluctuation ratio reference value based on a quantum circuit containing the N target qubits, until the target probability matches the probability threshold;

In the present embodiment, the probability threshold can be determined according to a preset reliability α, which is 1-α. The condition for the target probability to match the probability threshold may be equal, or the difference between the two may be within a preset value, such as 0.01 or 0.05. If the target probability matches the probability threshold, it means that the current fluctuation ratio reference value corresponding to the target probability is the target value fluctuation ratio. If the target probability does not match the probability threshold, it means that the current fluctuation ratio reference value is not the target value fluctuation ratio. Then, the fluctuation ratio reference value is updated according to the target probability and the probability threshold until the target probability matches the probability threshold.

Exemplary, if the target probability is less than the probability threshold, the fluctuation ratio reference value is updated according to the fluctuation ratio reference value and the right endpoint of the corresponding sampling interval of the fluctuation ratio reference value; if the target probability is greater than the probability threshold, the fluctuation ratio reference value is updated according to the fluctuation ratio reference value and the left endpoint of the corresponding sampling interval of the fluctuation ratio reference value.

Specifically, the fluctuation ratio reference value is determined and updated according to the dichotomy method, that is, in the sampling interval corresponding to the fluctuation ratio reference value, obtaining a determined fluctuation ratio reference value, and then calculating the probability that every value fluctuation ratio in the 2^{N} sampling points is smaller than the determined fluctuation ratio reference value, and determining if the probability matches the target probability corresponding to the target value fluctuation ratio. Wherein, the largest above-mentioned sampling interval is all value fluctuation ratios corresponding to 2^{N} sampling points. If it matches, it means that the fluctuation ratio reference value is the target value fluctuation ratio; if it does not match, it means that the fluctuation ratio reference value is not the target value fluctuation ratio, then continuing to obtain the next determined fluctuation ratio reference value in the sampling interval, and then performing determination until the fluctuation ratio reference value that makes the target probability match the probability threshold is the desired target value fluctuation ratio.

Specifically, regarding how to determine the fluctuation ratio reference value that makes the target probability match the probability threshold, the above-mentioned sampling interval (such as the left endpoint I_{S} to the right endpoint I_{L}) can be continuously narrowed, and then the value fluctuation ratio at the middle position can be cyclically obtained in the continuously narrowed sampling interval until a qualified fluctuation ratio reference value is determined.

As a specific implementation, first, the value fluctuation ratio corresponding to the middle position of the 2^{N} sampling points (initial sampling interval) can be obtained as the first fluctuation ratio reference value I₀, and then it is determined whether the target probability corresponding to I₀ matches the probability threshold.

If the target probability corresponding to I₀ matches the probability threshold, it means that I₀ is the fluctuation ratio reference value that makes the target probability match the probability threshold, that is, it means that I₀ is the qualified fluctuation ratio reference value I_{α};

If the target probability corresponding to I₀ is lower than the probability threshold, it means that I₀ is lower than I_{α}, then updating I₀ as the left endpoint of the sampling interval, and obtaining a value fluctuation ratio corresponding to the middle position of the right endpoint I_{L} and updated left endpoint I₀ as a second fluctuation ratio mean I₁.

If the target probability corresponding to I₀ is greater than the probability threshold, it means that I₀ is greater than I_{α}, then updating I₀ as the right endpoint of the sampling interval, and obtaining a value fluctuation ratio corresponding to the middle position of the left endpoint I_{S} and updated right endpoint I₀ as the second fluctuation ratio mean I₁.

Then, determining whether the target probability corresponding to I₁ match the probability threshold. If not, then continuing to update the left or right endpoint of the sampling interval.

By analogy, continuously reducing the sampling points in the sampling interval, and cyclically updating the fluctuation ratio reference value until determining the fluctuation ratio reference value that makes the target probability match the probability threshold in the sampling interval, that is, the updated fluctuation ratio reference value.

In more embodiments, if the fluctuation ratio reference value that makes the target probability match the probability threshold cannot be determined, when the sampling interval is reduced to the minimum sampling interval, the sampling interval cannot be reduced again if only two sampling points are included, and the current sampling point is used as the updated fluctuation ratio reference value.

Step S400, determining a target value fluctuation ratio of the target object according to the fluctuation ratio reference value, and calculating a target value-at-risk of the target object according to the target value fluctuation ratio.

In the present embodiment, the target value-at-risk is the maximum possible loss of the value of a certain target object within the future expiration time under a certain probability (confidence coefficient α). The fluctuation ratio reference value is the target value fluctuation ratio of the target object, and the target value fluctuation ratio is the daily risk variation ratio of the target object. The target value-at-risk of the target object can be calculated by multiplying the value corresponding to the target object, the target value fluctuation ratio and the expiration time corresponding to the target object.

A further embodiment of the present disclosure provides a quantum circuit-based value-at risk estimation device, and the value-at-risk estimation device comprises:
a preparing module configured for obtaining 2^{N} sampling points from a distribution profile of value fluctuation ratios of a target object, and preparing value fluctuation ratios and fluctuation ratio probabilities corresponding to the 2^{N} sampling points to a quantum state corresponding to N target qubits;
a probability calculating module configured for obtaining every target probability whose value fluctuation ratio is less than a preset fluctuation ratio reference value based on a quantum circuit containing the N target qubits;
a base updating module configured for updating, if the target probability does not match the preset probability threshold, the fluctuation ratio reference value according to the target probability and a preset probability threshold, and then returning to perform the step of obtaining every target probability whose value fluctuation ratio is less than a preset fluctuation ratio reference value based on a quantum circuit containing the N target qubits, until the target probability matches the probability threshold;
a value calculating module configured for determining a target value fluctuation ratio of the target object according to the fluctuation ratio reference value, and calculating a target value-at-risk of the target object according to the target value fluctuation ratio.

Further, the probability calculating module comprises specifically:
a logic gate determining unit configured for obtaining a preset result bit, and auxiliary bits in one-to-one correspondence with the target qubits, and determining quantum logic gates to be acted on the target qubits and corresponding auxiliary bits according to binary complement corresponding to the fluctuation ratio reference value;
a quantum state outputting unit configured for building and running the quantum circuit, and outputting to the result bit a result quantum state representing a comparison result of every value fluctuation ratio with the fluctuation ratio reference value;
a probability calculating unit configured for obtaining every target probability whose value fluctuation ratio is less than the fluctuation ratio reference value based on the result quantum state.

Further, the logic gate determining unit is specifically configured for:
sequentially determining the quantum logic gates to be acted on the target qubits and corresponding auxiliary bits according to each coded value of the binary complement corresponding to the fluctuation ratio reference value.

Further, the probability calculating unit is specifically configured for:
obtaining an amplitude value of a set state in the result quantum state and calculating every target probability whose value fluctuation ratio is less than the fluctuation ratio reference value according to the amplitude value of the set state.

Further, the base updating module comprises specifically:
a first updating unit configured for updating, if the target probability is lower than the probability threshold, the fluctuation ratio reference value according to the fluctuation ratio reference value and a right endpoint of a sampling interval corresponding to the fluctuation ratio reference value;
a second updating unit configured for updating, if the target probability is greater than the probability threshold, the fluctuation ratio reference value according to the fluctuation ratio reference value and a left endpoint of the sampling interval corresponding to the fluctuation ratio reference value.

Further, the preparing module comprises specifically:
a quantum state preparing unit configured for determining every eigenstate corresponding to the N target qubits according to the value fluctuation ratios corresponding to the 2^{N} sampling points, and determining an amplitude value of every eigenstate according to the fluctuation ratio probabilities corresponding to the 2^{N} sampling points.

Yet another embodiment of the present disclosure provides a storage medium in which a computer program is stored, wherein the computer program is configured for executing at runtime the steps in any of the above method embodiments.

Specifically, in the present embodiment, the storage medium may be set to store a computer program for performing the following steps:
S1, obtaining 2^{N} sampling points from a distribution profile of value fluctuation ratios of a target object, and preparing value fluctuation ratios and fluctuation ratio probabilities corresponding to the 2^{N} sampling points to a quantum state corresponding to N target qubits;
S2, obtaining every target probability whose value fluctuation ratio is less than a preset fluctuation ratio reference value based on a quantum circuit containing the N target qubits;
S3, updating the fluctuation ratio reference value according to the target probability and a preset probability threshold if the target probability does not match the preset probability threshold, and then returning to perform the step of obtaining every target probability whose value fluctuation ratio is less than a preset fluctuation ratio reference value based on a quantum circuit containing the N target qubits, until the target probability matches the probability threshold;
S4, determining a target value fluctuation ratio of the target object according to the fluctuation ratio reference value, and calculating a target value-at-risk of the target object according to the target value fluctuation ratio.

Specifically, in the present embodiment, the above storage media may include, but are not limited to: U disk, read-only memory (ROM), random access memory (RAM), portable hard disk, disc or optical disk and other media that can store computer programs.

Yet another embodiment of the present disclosure also provides an electronic device comprising a memory and a processor, the memory stores a computer program therein, and the processor is configured for running the computer program to execute steps in any of the above method embodiments.

Specifically, the electronic device may also include a transmission device and an input-output device, wherein the transmission device is connected to the above processor, and the input-output device is connected to the above processor.

Specifically, in the present embodiment, the above processor may be configured to perform the following steps by a computer program:
S1, obtaining 2^{N} sampling points from a distribution profile of value fluctuation ratios of a target object, and preparing value fluctuation ratios and fluctuation ratio probabilities corresponding to the 2^{N} sampling points to a quantum state corresponding to N target qubits;
S2, obtaining every target probability whose value fluctuation ratio is less than a preset fluctuation ratio reference value based on a quantum circuit containing the N target qubits;
S3, updating the fluctuation ratio reference value according to the target probability and a preset probability threshold if the target probability does not match the preset probability threshold, and then returning to perform the step of obtaining every target probability whose value fluctuation ratio is less than a preset fluctuation ratio reference value based on a quantum circuit containing the N target qubits, until the target probability matches the probability threshold;
S4, determining a target value fluctuation ratio of the target object according to the fluctuation ratio reference value, and calculating a target value-at-risk of the target object according to the target value fluctuation ratio.

The present disclosure may be a system, a method, and/or a computer program product. The computer program product may include a computer readable storage medium (or media) having computer readable program instructions thereon for causing a processor to carry out aspects of the present disclosure.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present disclosure may be assembler instructions, instruction-set-architecture (ISA) instructions, machine instructions, machine dependent instructions, microcode, firmware instructions, state-setting data, or either source code or object code written in any combination of one or more programming languages, comprising an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, comprising a local area network (LAN) or a wide area network (WAN), or the connection may be made to an external computer (for example, through the Internet using an Internet Service Provider). In some embodiments, electronic circuitry comprising, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture comprising instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions. It is well-known to a person skilled in the art that the implementations of using hardware, using software or using the combination of software and hardware can be equivalent.

Embodiments of the present disclosure have been presented for purposes of illustration, but are not intended to be exhaustive or limited to the embodiments disclosed. Numerous modifications and changes will be apparent to those skilled in the art without departing from the scope and spirit of the illustrated embodiments. The terminology used herein was chosen to best explain the principles of the embodiments, the practical application or technical improvement over technologies found in the marketplace, or to enable others of ordinary skill in the art to understand the embodiments disclosed herein. The scope of the present disclosure is defined by the appended claims.

The above embodiments based on the accompanying drawings detail the structure, characteristics and effects of the present disclosure, and are only better embodiments of the present disclosure, but the present disclosure does not limit the scope of implementation as shown in the drawings, and any change made in accordance with the conception of the present disclosure, or modified to an equivalent embodiment equivalent to the change, shall be within the scope of protection of the present disclosure if it does not exceed the spirit covered by the description and the drawings.

## Claims

1. A quantum circuit-based value-at risk estimation method, **characterized by** comprising:
obtaining 2^{N} sampling points from a distribution profile of value fluctuation ratios of a target object, and preparing value fluctuation ratios and fluctuation ratio probabilities corresponding to the 2^{N} sampling points to a quantum state corresponding to N target qubits;
obtaining every target probability whose value fluctuation ratio is less than a preset fluctuation ratio reference value based on a quantum circuit containing the N target qubits;
updating, if the target probability does not match the preset probability threshold, the fluctuation ratio reference value according to the target probability and a preset probability threshold, and then returning to perform the step of obtaining every target probability whose value fluctuation ratio is less than a preset fluctuation ratio reference value based on a quantum circuit containing the N target qubits, until the target probability matches the probability threshold; and
determining a target value fluctuation ratio of the target object according to the fluctuation ratio reference value, and calculating a target value-at-risk of the target object according to the target value fluctuation ratio.

2. The value-at-risk estimation method of claim 1, **characterized in that** the step of obtaining every target probability whose value fluctuation ratio is less than a preset fluctuation ratio reference value based on a quantum circuit containing the N target qubits, comprises:
obtaining a preset result bit, and auxiliary bits in one-to-one correspondence with the target qubits, and determining quantum logic gates to be acted on the target qubits and corresponding auxiliary bits according to binary complement corresponding to the fluctuation ratio reference value;
building and running the quantum circuit according to every quantum logic gate, and outputting to the result bit a result quantum state representing a comparison result of every value fluctuation ratio with the fluctuation ratio reference value; and
obtaining every target probability whose value fluctuation ratio is less than the fluctuation ratio reference value based on the result quantum state.

3. The value-at-risk estimation method of claim 2, **characterized in that** the step of determining quantum logic gates to be acted on the target qubits and corresponding auxiliary bits according to binary complement corresponding to the fluctuation ratio reference value, comprises:
sequentially determining the quantum logic gates to be acted on the target qubits and corresponding auxiliary bits according to each coded value of the binary complement corresponding to the fluctuation ratio reference value.

4. The value-at-risk estimation method of claim 2, **characterized in that** the step of obtaining every target probability whose value fluctuation ratio is less than the fluctuation ratio reference value based on the result quantum state, comprises:
obtaining an amplitude value of a set state in the result quantum state and calculating every target probability whose value fluctuation ratio is less than the fluctuation ratio reference value according to the amplitude value of the set state.

5. The value-at-risk estimation method of claim 4, **characterized in that** the step of obtaining an amplitude value of a set state in the result quantum state, comprises:
obtaining a current argument upper bound value and a current argument lower bound value corresponding to the amplitude value of the set state in the result quantum state, and calculating a first difference value of the current argument upper bound value and the current argument lower bound value as a target difference value;
determining, when the target difference value is greater than a preset accuracy threshold, a next argument magnification factor as well as a next labeling parameter corresponding to a next iteration step according to a preset intermediate variable parameter, the current argument upper bound value and the current argument lower bound value;
controlling a preset amplification quantum comparator circuit to amplify the quantum comparator circuit by the next argument amplification factor, and measuring the set state in the result quantum state in amplified quantum comparator circuit according to a preset total number of observation;
according to the current argument upper bound value, the current argument lower bound value, the next argument amplification factor, the next labeling parameter as well as a measurement result of the set state in the result quantum state, obtaining a second difference value of a next argument upper bound value and a next argument lower bound value of the amplitude value of the set state in the result quantum state as a target difference value until the target difference value is greater than the accuracy threshold; and
determining the amplitude value of the set state in the result quantum state according to the measurement result of the set state in the result quantum state.

6. The value-at-risk estimation method of any one of claims 1 to 5, **characterized in that** the step of updating, if the target probability does not match the preset probability threshold, the fluctuation ratio reference value according to the target probability and a preset probability threshold, comprises:
updating, if the target probability is lower than the probability threshold, the fluctuation ratio reference value according to the fluctuation ratio reference value and a right endpoint of a sampling interval corresponding to the fluctuation ratio reference value; and
updating, if the target probability is greater than the probability threshold, the fluctuation ratio reference value according to the fluctuation ratio reference value and a left endpoint of the sampling interval corresponding to the fluctuation ratio reference value.

7. The value-at-risk estimation method of any one of claims 1 to 6, **characterized in that** the step of preparing value fluctuation ratios and fluctuation ratio probabilities corresponding to the 2^{N} sampling points to a quantum state corresponding to N target qubits, comprises:
determining every eigenstate corresponding to the N target qubits according to the value fluctuation ratios corresponding to the 2^{N} sampling points, and determining an amplitude value of every eigenstate according to the fluctuation ratio probabilities corresponding to the 2^{N} sampling points.

8. A quantum circuit-based value-at risk estimation device, **characterized in that** the value-at-risk estimation device comprises:
a preparing module configured for obtaining 2^{N} sampling points from a distribution profile of value fluctuation ratios of a target object, and preparing value fluctuation ratios and fluctuation ratio probabilities corresponding to the 2^{N} sampling points to a quantum state corresponding to N target qubits;
a probability calculating module configured for obtaining every target probability whose value fluctuation ratio is less than a preset fluctuation ratio reference value based on a quantum circuit containing the N target qubits;
a base updating module configured for updating, if the target probability does not match the preset probability threshold, the fluctuation ratio reference value according to the target probability and a preset probability threshold, and then returning to perform the step of obtaining every target probability whose value fluctuation ratio is less than a preset fluctuation ratio reference value based on a quantum circuit containing the N target qubits, until the target probability matches the probability threshold; and
a value calculating module configured for determining a target value fluctuation ratio of the target object according to the fluctuation ratio reference value, and calculating a target value-at-risk of the target object according to the target value fluctuation ratio.

9. A storage medium, **characterized in that** the storage medium stores a computer program therein, wherein the computer program is configured for executing at runtime the method of any one of claims 1 to 7.

10. An electronic device comprising a memory and a processor, **characterized in that** the memory stores a computer program therein, and the processor is configured for running the computer program to execute the method of any one of claims 1 to 7.
